(19)

Europäisches
Patentamt
European
Patent Office
Office européen
des brevets

(11) **EP 4 571 586 A1**

(12) **EUROPEAN PATENT APPLICATION**
published in accordance with Art. 153(4) EPC

(43) Date of publication:
**18.06.2025 Bulletin 2025/25**

(21) Application number: **22955806.9**

(22) Date of filing: **18.08.2022**

(51) International Patent Classification (IPC):
*G06N 3/08* (2023.01)       *G06N 3/04* (2023.01)
*G06T 7/11* (2017.01)       *G06T 5/20* (2006.01)
*G06V 10/82* (2022.01)

(52) Cooperative Patent Classification (CPC):
**G06N 3/04; G06N 3/08; G06T 5/20; G06T 7/11;
G06V 10/82**

(86) International application number:
**PCT/KR2022/012366**

(87) International publication number:
**WO 2024/038931 (22.02.2024 Gazette 2024/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **LG Electronics Inc.
Yeongdeungpo-gu
Seoul 07336 (KR)**

(72) Inventors:
• **KIM, Sungjin**
  **Seoul 06772 (KR)**

• **JEON, Younghyeog**
  **Seoul 06772 (KR)**
• **HEO, Jeong**
  **Seoul 06772 (KR)**
• **HUR, Jinyoung**
  **Seoul 06772 (KR)**
• **KIM, Joongrock**
  **Seoul 06772 (KR)**
• **LEE, Jaehoon**
  **Seoul 06772 (KR)**

(74) Representative: **Schornack, Oliver et al
Wuesthoff & Wuesthoff
Patentanwälte und Rechtsanwalt PartG mbB
Schweigerstraße 2
81541 München (DE)**

(54) **ARTIFICIAL INTELLIGENCE APPARATUS AND SEGMENTATION LEARNING METHOD THEREFOR**

(57)    The present disclosure relates to an artificial intelligence apparatus capable of performing segmentation learning by automatically generating a mask, which is ground truth (GT) data, and a segmentation learning method thereof, and may input a real image into a pre-learned generative model to generate a fake image, input the fake image into a pre-learned segmentation model to generate a fake mask, filter the generated fake image and the fake mask, input the filtered fake image into a pre-learned dataset generative model to generate a dataset including the fake image and the fake mask, and input the dataset as learning data to re-learn the segmentation model.

FIG. 4

**EP 4 571 586 A1**

**Description**

[Technical Field]

The present disclosure relates to an artificial intelligence apparatus capable of performing segmentation learning by automatically generating a mask, which is ground truth (GT) data, and a segmentation learning method thereof.

[Background Art]

In general, artificial intelligence is a field of computer engineering and information technology that studies how to enable computers to think, learn, and develop themselves in ways that human intelligence can do, meaning that computers can imitate human intelligent behavior.

In addition, artificial intelligence does not exist in itself, but is directly or indirectly related to other fields of computer science. In particular, in modern times, attempts are being made very actively to introduce artificial intelligence elements into various fields of information technology and utilize them to solve problems in those fields.

Meanwhile, technologies that use artificial intelligence to recognize and learn the surrounding situation, provide the user with the information they want in the desired format, or perform actions or functions they want are being actively researched.

In addition, electronic devices that provide these various operations and functions can be referred to as artificial intelligence devices.

Recently, as interest in deep learning has increased, securing a large dataset has greatly affected the performance of the model.

In order to collect a dataset, in addition to collecting image data, it is important to secure a mask, which is ground truth (GT) data for model segmentation learning.

However, in the past, masks for segmentation learning had to be created manually one by one, which made the mask creation process very complex and cumbersome, and took a lot of time and money.

Therefore, in the future, it is necessary to develop artificial intelligence technology that can automatically generate masks and use the automatically generated masks as segmentation learning data to improve the segmentation performance of the artificial intelligence model.

[Disclosure]

[Technical Problem]

An object of the present disclosure is to solve the problems described above and other problems.

An object of the present disclosure is to provide an artificial intelligence apparatus which can minimize the time and cost for mask generation and improve segmentation performance by automatically generating a dataset including a mask using a dataset generative model and relearning a segmentation model using the generated dataset as learning data, and a segmentation learning method thereof.

[Technical Solution]

According to an embodiment of the present disclosure, an artificial intelligence apparatus includes a memory storing learning data; and, a processor performing segmentation learning using the learning data, in which the processor may input a real image into a pre-learned generation model to generate a fake image, input the fake image into a pre-learned segmentation model to generate a fake mask, filter the generated fake image and the fake mask, input the filtered fake image into a pre-learned dataset generation model to generate a dataset including the fake image and the fake mask, and input the dataset as learning data to re-learn the segmentation model.

According to an embodiment of the present disclosure, a segmentation learning method of an artificial intelligence apparatus may include generating a fake image by inputting a real image into a pre-learned generation model; generating a fake mask by inputting the fake image into a pre-learned segmentation model; filtering the generated fake image and the fake mask; generating a dataset including the fake image and the fake mask by inputting the filtered fake image into a pre-learned dataset generation model; and re-learning the segmentation model by inputting the dataset as training data.

[Advantageous Effect]

According to one embodiment of the present disclosure, an artificial intelligence apparatus can minimize time and cost for mask generation and improve segmentation performance by automatically generating a dataset including a mask using a dataset generative model and relearning a segmentation model using the generated dataset as training data.

[Description of Drawings]

FIG. 1 illustrates an artificial intelligence apparatus according to an embodiment of the present disclosure.
FIG. 2 illustrates an artificial intelligence server according to an embodiment of the present disclosure.
FIG. 3 illustrates an artificial intelligence system according to an embodiment of the present disclosure.
FIG. 4 is a diagram for explaining the operation of an artificial intelligence apparatus according to an embodiment of the present disclosure.
FIG. 5 is a diagram for explaining a mask generation process of a segmentation model according to one embodiment of the present disclosure.
FIG. 6 is a diagram for explaining a process of generating a fake image of a generative model according to an embodiment of the present disclosure.
FIG. 7 is a diagram for explaining a process of generating a fake mask of a segmentation model according to an embodiment of the present disclosure.
FIG. 8 is a diagram for explaining a filtering process of a filter according to one embodiment of the present disclosure.
FIG. 9 is a diagram for explaining the learning process of a dataset generative model according to an embodiment of the present disclosure.
FIG. 10 is a diagram for explaining a dataset generation process of a dataset generative model according to an embodiment of the present disclosure.
FIG. 11 is a diagram for explaining a generator of a generative model according to one embodiment of the present disclosure.
FIG. 12 is a diagram illustrating a fake mask generated from a segmentation model according to an embodiment of the present disclosure.
FIG. 13 is a diagram for explaining a process for calculating image similarity and mask similarity of a filter according to an embodiment of the present disclosure.
FIG. 14 is a diagram illustrating a dataset generated from a dataset generative model according to an embodiment of the present disclosure.
FIG. 15 is a diagram for explaining a re-learning process of a segmentation model according to an embodiment of the present disclosure.
FIG. 16 is a flowchart for explaining a segmentation learning method of an artificial intelligence apparatus according to an embodiment of the present disclosure.
FIGS. 17 to 19 are diagrams illustrating a shoe image segmentation process of an artificial intelligence apparatus according to an embodiment of the present disclosure.

[Best Mode]

Hereinafter, embodiments of the present disclosure are described in more detail with reference to accompanying drawings and regardless of the drawings symbols, same or similar components are assigned with the same reference numerals and thus overlapping descriptions for those are omitted. The suffixes "module" and "part" for components used in the description below are assigned or mixed in consideration of easiness in writing the specification and do not have distinctive meanings or roles by themselves. In the following description, detailed descriptions of well-known functions or constructions will be omitted since they would obscure the disclosure in unnecessary detail. Additionally, the accompanying drawings are used to help easily understanding embodiments disclosed herein but the technical idea of the present disclosure is not limited thereto. It should be understood that all of variations, equivalents or substitutes contained in the concept and technical scope of the present disclosure are also included.
It will be understood that the terms "first" and "second" are used herein to describe various components but these components should not be limited by these terms. These terms are used only to distinguish one component from other components.
In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). It will be further understood that when one component is referred to as being 'directly connected' or 'directly linked' to another component, it means that no intervening component is present.
Also, throughout this specification, a neural network and a network function may be used interchangeably. The neural network may be constituted by a set of interconnected computational parts, which may be generally referred to as "nodes". These "nodes" may also be referred to as "neurons". The neural network is configured to include at least two or more nodes. Nodes (or neurons) constituting neural networks may be interconnected by one or more "links".

<Artificial Intelligence (AI)>

Artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

An artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value.

The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function.

The purpose of the learning of the artificial neural network may be to determine the model parameters that minimize a loss function. The loss function may be used as an index to determine optimal model parameters in the learning process of the artificial neural network.

Machine learning may be classified into supervised learning, unsupervised learning, and reinforcement learning according to a learning method.

The supervised learning may refer to a method of training an artificial neural network in a state in which a label for learning data is given, and the label may mean the correct answer (or result value) that the artificial neural network must infer when the learning data is input to the artificial neural network. The unsupervised learning may refer to a method of training an artificial neural network in a state in which a label for learning data is not given. The reinforcement learning may refer to a learning method in which an agent defined in a certain environment learns to select a behavior or a behavior sequence that maximizes cumulative compensation in each state.

Machine learning, which is implemented as a deep neural network (DNN) including a plurality of hidden layers among artificial neural networks, is also referred to as deep learning, and the deep learning is part of machine learning. In the following, machine learning is used to mean deep learning.

<Robot>

A robot may refer to a machine that automatically processes or operates a given task by its own ability. In particular, a robot having a function of recognizing an environment and performing a self-determination operation may be referred to as an intelligent robot.

Robots may be classified into industrial robots, medical robots, home robots, military robots, and the like according to the use purpose or field.

The robot includes a driving part may include an actuator or a motor and may perform various physical operations such as moving a robot joint. In addition, a movable robot may include a wheel, a brake, a propeller, and the like in a driving part, and may travel on the ground through the driving part or fly in the air.

<Self-Driving>

Self-driving refers to a technique of driving for oneself, and a self-driving vehicle refers to a vehicle that travels without an operation of a user or with a minimum operation of a user.

For example, the self-driving may include a technology for maintaining a lane while driving, a technology for automatically adjusting a speed, such as adaptive cruise control, a technique for automatically traveling along a predetermined route, and a technology for automatically setting and traveling a route when a destination is set.

The vehicle may include a vehicle having only an internal combustion engine, a hybrid vehicle having an internal combustion engine and an electric motor together, and an electric vehicle having only an electric motor, and may include not only an automobile but also a train, a motorcycle, and the like.

In this case, the self-driving vehicle may be regarded as a robot having a self-driving function.

<eXtended Reality (XR)>

Extended reality is collectively referred to as virtual reality (VR), augmented reality (AR), and mixed reality (MR). The VR technology provides a real-world object and background only as a CG image, the AR technology provides a virtual CG image on a real object image, and the MR technology is a computer graphic technology that mixes and combines virtual objects into the real world.

The MR technology is similar to the AR technology in that the real object and the virtual object are illustrated together. However, in the AR technology, the virtual object is used in the form that complements the real object, whereas in the MR technology, the virtual object and the real object are used in an equal manner.

The XR technology may be applied to a head-mount display (HMD), a head-up display (HUD), a mobile phone, a tablet PC, a laptop, a desktop, a TV, a digital signage, and the like. A device to which the XR technology is applied may be referred to as an XR device.

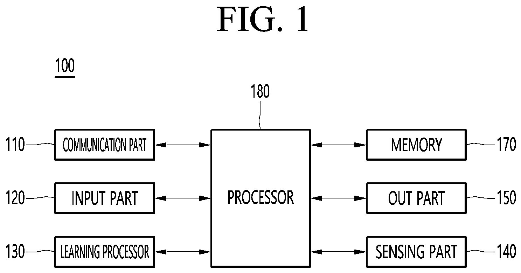

FIG. 1 illustrates an AI device 100 according to an embodiment of the present disclosure.

The AI device (or an AI apparatus) 100 may be implemented by a stationary device or a mobile device, such as a TV, a projector, a mobile phone, a smartphone, a desktop computer, a notebook, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, a digital signage, a robot, a vehicle, and the like.

Referring to FIG. 1, the AI device 100 may include a communication part 110, an input part 120, a learning processor 130, a sensing part 140, an output part 150, a memory 170, and a processor 180.

The communication part 110 may transmit and receive data to and from external devices such as other AI devices 100a to 100e and the AI server 200 by using wire/wireless communication technology. For example, the communication part 110 may transmit and receive sensor information, a user input, a learning model, and a control signal to and from external devices.

The communication technology used by the communication part 110 includes GSM (Global System for Mobile communication), CDMA (Code Division Multi Access), LTE (Long Term Evolution), 5G, WLAN (Wireless LAN), Wi-Fi (Wireless-Fidelity), Bluetooth™, RFID (Radio Frequency Identification), Infrared Data Association (IrDA), ZigBee, NFC (Near Field Communication), and the like.

The input part 120 may acquire various kinds of data.

In this case, the input part 120 may include a camera for inputting a video signal, a microphone for receiving an audio signal, and a user input part for receiving information from a user. The camera or the microphone may be treated as a sensor, and the signal obtained from the camera or the microphone may be referred to as sensing data or sensor information.

The input part 120 may acquire a learning data for model learning and an input data to be used if an output is obtained by using learning model. The input part 120 may acquire raw input data. In this case, the processor 180 or the learning processor 130 may extract an input feature by preprocessing the input data.

The learning processor 130 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

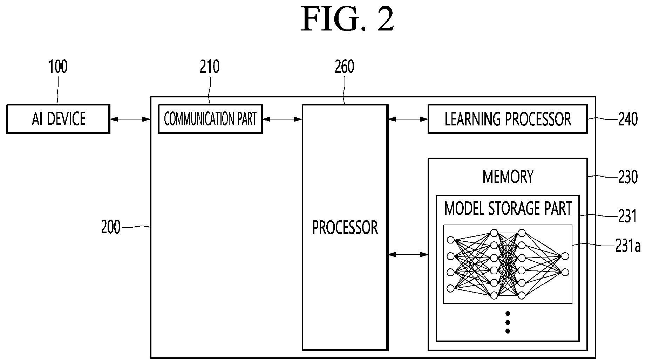

At this time, the learning processor 130 may perform AI processing together with the learning processor 240 of the AI server 200 of FIG. 2.

At this time, the learning processor 130 may include a memory integrated or implemented in the AI device 100. Alternatively, the learning processor 130 may be implemented by using the memory 170, an external memory directly connected to the AI device 100, or a memory held in an external device.

The sensing part 140 may acquire at least one of internal information about the AI device 100, ambient environment information about the AI device 100, and user information by using various sensors.

Examples of the sensors included in the sensing part 140 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output part 150 may generate an output related to a visual sense, an auditory sense, or a haptic sense.

At this time, the output part 150 may include a display part for outputting time information, a speaker for outputting auditory information, and a haptic module for outputting haptic information.

The memory 170 may store data that supports various functions of the AI device 100. For example, the memory 170 may store input data obtained by the input part 120, learning data, a learning model, a learning history, and the like.

The processor 180 may determine at least one executable operation of the AI device 100 based on information determined or generated by using a data analysis algorithm or a machine learning algorithm. The processor 180 may control the components of the AI device 100 to execute the determined operation.

To this end, the processor 180 may request, search, receive, or utilize data of the learning processor 130 or the memory 170. The processor 180 may control the components of the AI device 100 to execute the predicted operation or the operation determined to be desirable among the at least one executable operation.

When the connection of an external device is required to perform the determined operation, the processor 180 may generate a control signal for controlling the external device and may transmit the generated control signal to the external device.

The processor 180 may acquire intention information for the user input and may determine the user's requirements based on the obtained intention information.

The processor 180 may acquire the intention information corresponding to the user input by using at least one of a speech to text (STT) engine for converting speech input into a text string or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 130, may be learned by the learning processor 240 of the AI server 200, or may be learned by their distributed processing.

The processor 180 may collect history information including the operation contents of the AI apparatus 100 or the user's feedback on the operation and may store the collected history information in the memory 170 or the learning processor 130 or transmit the collected history information to the external device such as the AI server 200. The collected history information may be used to update the learning model.

The processor 180 may control at least part of the components of AI device 100 so as to drive an application program stored in the memory 170. Furthermore, the processor 180 may operate two or more of the components included in the AI device 100 in combination so as to drive the application program.

FIG. 2 illustrates an AI server 200 according to an embodiment of the present disclosure.

Referring to FIG. 2, the AI server 200 may refer to a device that learns an artificial neural network by using a machine learning algorithm or uses a learned artificial neural network/ The AI server 200 may include a plurality of servers to perform distributed processing or may be defined as a 5G network. In this case, the AI server 200 may be included as a partial configuration of the AI device 100, and may perform at least part of the AI processing together.

The AI server 200 may include a communication part 210, a memory 230, a learning processor 240, a processor 260, and the like.

The communication part 210 may transmit and receive data to and from an external device such as the AI device 100.

The memory 230 may include a model storage part 231. The model storage part 231 may store a learning or learned model (or an artificial neural network 231a) through the learning processor 240.

The learning processor 240 may learn the artificial neural network 231a by using the learning data. The learning model may be used in a state of being mounted on the AI server 200 of the artificial neural network, or may be used in a state of being mounted on an external device such as the AI device 100.

The learning model may be implemented in hardware, software, or a combination of hardware and software. If all or part of the learning models are implemented in software, one or more instructions that constitute the learning model may be stored in memory 230.

The processor 260 may infer the result value for new input data by using the learning model and may generate a response or a control command based on the inferred result value.

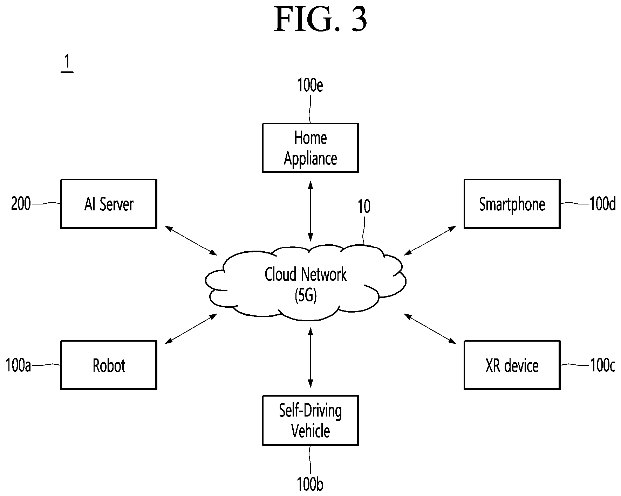

FIG. 3 is a view of an AI system 1 according to an embodiment of the present invention.

Referring to FIG. 3, in the AI system 1, at least one of an AI server 200, a robot 100a, a self-driving vehicle 100b, an XR device 100c, a smartphone 100d, or a home appliance 100e is connected to a cloud network 10. The robot 100a, the self-driving vehicle 100b, the XR device 100c, the smartphone 100d, or the home appliance 100e, to which the AI technology is applied, may be referred to as AI devices 100a to 100e.

The cloud network 10 may refer to a network that forms part of a cloud computing infrastructure or exists in a cloud computing infrastructure. The cloud network 10 may be configured by using a 3G network, a 4G or LTE network, or a 5G network.

In other words, the devices 100a to 100e and 200 configuring the AI system 1 may be connected to each other through the cloud network 10. In particular, each of the devices 100a to 100e and 200 may communicate with each other through a base station, but may directly communicate with each other without using a base station.

The AI server 200 may include a server that performs AI processing and a server that performs operations on big data.

The AI server 200 may be connected to at least one of the AI devices constituting the AI system 1, that is, the robot 100a, the self-driving vehicle 100b, the XR device 100c, the smartphone 100d, or the home appliance 100e through the cloud network 10, and may assist at least part of AI processing of the connected AI devices 100a to 100e.

At this time, the AI server 200 may learn the artificial neural network according to the machine learning algorithm instead of the AI devices 100a to 100e, and may directly store the learning model or transmit the learning model to the AI devices 100a to 100e.

At this time, the AI server 200 may receive input data from the AI devices 100a to 100e, may infer the result value for the accommodated input data by using the learning model, may generate a response or a control command based on the inferred result value, and may transmit the response or the control command to the AI devices 100a to 100e.

Alternatively, the AI devices 100a to 100e may infer the result value for the input data by directly using the learning model, and may generate the response or the control command based on the inference result.

Hereinafter, various embodiments of the AI devices 100a to 100e to which the above-described technology is applied will be described. The AI devices 100a to 100e illustrated in FIG. 3 may be regarded as a specific embodiment of the AI device 100 illustrated in FIG. 1.

<AI + Robot>

The robot 100a, to which the AI technology is applied, may be implemented as a guide robot, a carrying robot, a cleaning robot, a wearable robot, an entertainment robot, a pet robot, an unmanned flying robot, or the like.

The robot 100a may include a robot control module for controlling the operation, and the robot control module may refer to a software module or a chip implementing the software module by hardware.

The robot 100a may acquire state information about the robot 100a by using sensor information obtained from various kinds of sensors, may detect (recognize) surrounding environment and objects, may generate map data, may determine the route and the travel plan, may determine the response to user interaction, or may determine the operation.

The robot 100a may use the sensor information obtained from at least one sensor among the lidar, the radar, and the camera so as to determine the travel route and the travel plan.

The robot 100a may perform the above-described operations by using the learning model provided as at least one artificial neural network. For example, the robot 100a may recognize the surrounding environment and the objects by using the learning model, and may determine the operation by using the recognized surrounding information or object information. The learning model may be learned directly from the robot 100a or may be learned from an external device such as the AI server 200.

At this time, the robot 100a may perform the operation by generating the result by directly using the learning model, but the sensor information may be transmitted to the external device such as the AI server 200 and the generated result may be accommodated to perform the operation.

The robot 100a may use at least one of the map data, the object information detected from the sensor information, or the object information obtained from the external apparatus to determine the travel route and the travel plan, and may control the driving part such that the robot 100a travels along the determined travel route and travel plan.

The map data may include object identification information about various objects arranged in the space in which the robot 100a moves. For example, the map data may include object identification information about fixed objects such as walls and doors and movable objects such as pollen and desks. The object identification information may include a name, a type, a distance, and a position.

In addition, the robot 100a may perform the operation or travel by controlling the driving part based on the control/interaction of the user. At this time, the robot 100a may acquire the intention information of the interaction due to the user's operation or speech utterance, and may determine the response based on the obtained intention information, and may perform the operation.

<AI + Self-Driving>

The self-driving vehicle 100b, to which the AI technology is applied, may be implemented as a mobile robot, a vehicle, an unmanned flying vehicle, or the like.

The self-driving vehicle 100b may include a self-driving control module for controlling a self-driving function, and the self-driving control module may refer to a software module or a chip implementing the software module by hardware. The self-driving control module may be included in the self-driving vehicle 100b as a component thereof, but may be implemented with separate hardware and connected to the outside of the self-driving vehicle 100b.

The self-driving vehicle 100b may acquire state information about the self-driving vehicle 100b by using sensor information obtained from various kinds of sensors, may detect (recognize) surrounding environment and objects, may generate map data, may determine the path and the travel plan, or may determine the operation.

Like the robot 100a, the self-driving vehicle 100b may use the sensor information obtained from at least one sensor among the lidar, the radar, and the camera so as to determine the travel path and the travel plan.

In particular, the self-driving vehicle 100b may recognize the environment or objects for an area covered by a field of view or an area over a certain distance by receiving the sensor information from external devices, or may receive directly recognized information from the external devices.

The self-driving vehicle 100b may perform the above-described operations by using the learning model composed of at least one artificial neural network. For example, the self-driving vehicle 100b may recognize the surrounding environment and the objects by using the learning model, and may determine the traveling movement line by using the recognized surrounding information or object information. The learning model may be learned directly from the self-driving vehicle 100a or may be learned from an external device such as the AI server 200.

In this case, the self-driving vehicle 100b may perform the operation by generating the result by directly using the learning model, but the sensor information may be transmitted to the external device such as the AI server 200 and the generated result may be received to perform the operation.

The self-driving vehicle 100b may use at least one of the map data, the object information detected from the sensor information, or the object information obtained from the external apparatus to determine the travel path and the travel plan, and may control the driving device such that the self-driving vehicle 100b travels along the determined travel path and travel plan.

The map data may include object identification information about various objects arranged in the space (for example, road) in which the self-driving vehicle 100b travels. For example, the map data may include object identification information about fixed objects such as street lamps, rocks, and buildings and movable objects such as vehicles and pedestrians. The object identification information may include a name, a type, a distance, and a position.

In addition, the self-driving vehicle 100b may perform the operation or travel by controlling the driving device based on the control/interaction of the user. In this case, the self-driving vehicle 100b may acquire the intention information of the interaction due to the user's operation or speech utterance, and may determine the response based on the obtained intention information, and may perform the operation.

<AI+XR>

The XR device 100c, to which the AI technology is applied, may be implemented by a head-mount display (HMD), a head-up display (HUD) provided in the vehicle, a television, a mobile phone, a smartphone, a computer, a wearable device, a home appliance, a digital signage, a vehicle, a fixed robot, a mobile robot, or the like.

The XR device 100c may analyzes three-dimensional point cloud data or image data obtained from various sensors or the external devices, generate position data and attribute data for the three-dimensional points, acquire information about the surrounding space or the real object, and render to output the XR object to be output. For example, the XR device 100c may output an XR object including the additional information about the recognized object in correspondence to the recognized object.

The XR device 100c may perform the above-described operations by using the learning model composed of at least one artificial neural network. For example, the XR device 100c may recognize the real object from the three-dimensional point cloud data or the image data by using the learning model, and may provide information corresponding to the recognized real object. The learning model may be directly learned from the XR device 100c, or may be learned from the external device such as the AI server 200.

In this case, the XR device 100c may perform the operation by generating the result by directly using the learning model, but the sensor information may be transmitted to the external device such as the AI server 200 and the generated result may be received to perform the operation.

<AI + Robot + Self-Driving>

The robot 100a, to which the AI technology and the self-driving technology are applied, may be implemented as a guide robot, a carrying robot, a cleaning robot, a wearable robot, an entertainment robot, a pet robot, an unmanned flying robot, or the like.

The robot 100a, to which the AI technology and the self-driving technology are applied, may refer to the robot itself having the self-driving function or the robot 100a interacting with the self-driving vehicle 100b.

The robot 100a having the self-driving function may collectively refer to a device that moves for itself along the given movement line without the user's control or moves for itself by determining the movement line by itself.

The robot 100a and the self-driving vehicle 100b having the self-driving function may use a common sensing method so as to determine at least one of the travel route or the travel plan. For example, the robot 100a and the self-driving vehicle 100b having the self-driving function may determine at least one of the travel route or the travel plan by using the information sensed through the lidar, the radar, and the camera.

The robot 100a that interacts with the self-driving vehicle 100b exists separately from the self-driving vehicle 100b and may perform operations interworking with the self-driving function of the self-driving vehicle 100b or interworking with the user who rides on the self-driving vehicle 100b.

At this time, the robot 100a interacting with the self-driving vehicle 100b may control or assist the self-driving function of the self-driving vehicle 100b by acquiring sensor information on behalf of the self-driving vehicle 100b and providing the sensor information to the self-driving vehicle 100b, or by acquiring sensor information, generating environment information or object information, and providing the information to the self-driving vehicle 100b.

Alternatively, the robot 100a interacting with the self-driving vehicle 100b may monitor the user boarding the self-driving vehicle 100b, or may control the function of the self-driving vehicle 100b through the interaction with the user. For example, when it is determined that the driver is in a drowsy state, the robot 100a may activate the self-driving function of the self-driving vehicle 100b or assist the control of the driving part of the self-driving vehicle 100b. The function of the self-driving vehicle 100b controlled by the robot 100a may include not only the self-driving function but also the function provided by the navigation system or the audio system provided in the self-driving vehicle 100b.

Alternatively, the robot 100a that interacts with the self-driving vehicle 100b may provide information or assist the function to the self-driving vehicle 100b outside the self-driving vehicle 100b. For example, the robot 100a may provide traffic information including signal information and the like, such as a smart signal, to the self-driving vehicle 100b, and automatically connect an electric charger to a charging port by interacting with the self-driving vehicle 100b like an automatic electric charger of an electric vehicle.

<AI + Robot + XR>

The robot 100a, to which the AI technology and the XR technology are applied, may be implemented as a guide robot, a carrying robot, a cleaning robot, a wearable robot, an entertainment robot, a pet robot, an unmanned flying robot, a drone, or the like.

The robot 100a, to which the XR technology is applied, may refer to a robot subjected to control/interaction in an XR image. In this case, the robot 100a may be separated from the XR device 100c and interwork with each other.

If the robot 100a, which is subjected to control/interaction in the XR image, may acquire the sensor information from the sensors including the camera, the robot 100a or the XR device 100c may generate the XR image based on the sensor information, and the XR device 100c may output the generated XR image. The robot 100a may operate based on the control signal input through the XR device 100c or the user's interaction.

For example, the user may confirm the XR image corresponding to the time point of the robot 100a interworking remotely through the external device such as the XR device 100c, adjust the self-driving travel path of the robot 100a through interaction, control the operation or driving, or confirm the information about the surrounding object.

<AI + Self-Driving + XR>

The self-driving vehicle 100b, to which the AI technology and the XR technology are applied, may be implemented as a mobile robot, a vehicle, an unmanned flying vehicle, or the like.

The self-driving vehicle 100b, to which the XR technology is applied, may refer to a self-driving vehicle having a means for providing an XR image or a self-driving vehicle subjected to control/interaction in an XR image. Particularly, the self-driving vehicle 100b In other words subjected to control/interaction in the XR image may be distinguished from the XR device 100c and interwork with each other.

The self-driving vehicle 100b having the means for providing the XR image may acquire the sensor information from the sensors including the camera and output the generated XR image based on the obtained sensor information. For example, the self-driving vehicle 100b may include an HUD to output an XR image, thereby providing a passenger with a real object or an XR object corresponding to an object in the screen.

In this case, if the XR object is output to the HUD, at least part of the XR object may be outputted so as to overlap the actual object to which the passenger's gaze is directed. Meanwhile, if the XR object is output to the display provided in the self-driving vehicle 100b, at least part of the XR object may be output so as to overlap the object in the screen. For example, the self-driving vehicle 100b may output XR objects corresponding to objects such as a lane, another vehicle, a traffic light, a traffic sign, a two-wheeled vehicle, a pedestrian, a building, and the like.

If the self-driving vehicle 100b, which is subjected to control/interaction in the XR image, may acquire the sensor information from the sensors including the camera, the self-driving vehicle 100b or the XR device 100c may generate the XR image based on the sensor information, and the XR device 100c may output the generated XR image. The self-driving vehicle 100b may operate based on the control signal input through the external device such as the XR device 100c or the user's interaction.

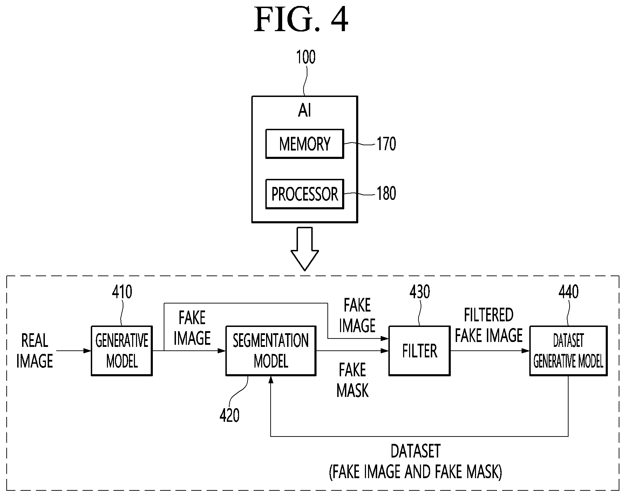

FIG. 4 is a diagram for explaining the operation of an artificial intelligence apparatus according to an embodiment of the present disclosure.

As illustrated in FIG. 4, the artificial intelligence apparatus 100 of the present disclosure may include a memory 170 that stores learning data and a processor 180 that performs segmentation learning using the learning data.

Here, the processor 180 inputs a real image into a pre-learned generative model 410 to generate a fake image, inputs the fake image into a pre-learned segmentation model 420 to generate a fake mask, inputs the generated fake image and fake mask into a filter 430 to filter them, inputs the filtered fake image into a pre-learned dataset generative model 440 to generate a dataset including the fake image and fake mask, and inputs the dataset as training data to relearn the segmentation model 420.

In addition, the processor 180 can obtain a real image and the mask thereof, and input the obtained real image and the mask thereof into a segmentation learning machine to learn a segmentation model.

Here, the processor 180 can input learning data including real images and masks of the same class into the segmentation learning machine.

For example, the processor 180 may obtain a mask of the same product class as the real image if the real image is of a specific product class, and input learning data including the obtained real image and mask of the same specific product class into the segmentation learning machine.

Additionally, when the segmentation model 420 is learned, the processor 180 can input a real image into the learned segmentation model 420 to generate a mask, which is ground truth (GT) data.

Next, the processor 180 can obtain a real image and input the obtained real image into the generative model 410 to learn the generative model 410 to generate a latent code, which is a latent vector that has learned the characteristics of the real image.

Here, the generative model 410 may include a generator of a generative adversarial network (GAN).

Next, the processor 180 can input latent code into the generator of the generative model 410 to generate a fake image once the generative model 410 is learned.

In addition, when a fake image is generated through a generative model 410 and a fake mask is generated through a segmentation model 420, the processor 180 can input the generated fake image and fake mask into a filter 430 including a filtering algorithm to filter to select only the fake image and fake mask of a higher level.

Here, the processor 180 calculates the image similarity between the original image corresponding to the fake image and the restored image through a filtering algorithm, calculates the mask similarity between the original mask corresponding to the fake mask and the restored mask, and calculates an error value based on the calculated image similarity and mask similarity to select only fake images and fake masks of a higher level at a certain ratio.

For example, the processor calculates the image similarity using a formula consisting of

$$image\ similarity = \frac{1}{n}\sum_{i=0}^{n}(I_{real}(i)-I_{fake}(i))^2$$, calculates the mask similarity using a formula consisting of

$$mask\ similarity = \frac{1}{n}\sum_{i=0}^{n}(M_{real}(i)-M_{fake}(i))^2$$, and calculates the error value using a formula consisting of

$$Error = \frac{1}{n}\sum_{i=0}^{n}(I_{real}(i)-I_{fake}(i))^2 + \frac{1}{n}\sum_{i=0}^{n}(M_{real}(i)-M_{fake}(i))^2$$.

Here, the processor 180 can select only about 50% of fake images having a high level and about 50% of fake masks having a high level among a plurality of fake images and a plurality of fake masks input to the filter 430, but this is only an example and is not limited thereto.

In addition, when the processor 180 inputs a fake image and a fake mask to the filter 430, the fake image and the fake mask corresponding thereto correspond to each other one-to-one and are input to the filter 430 as a pair, and through the filter 430, filters the fake image of a higher level and the fake mask corresponding thereto correspond to each other one-to-one and are selected as a pair.

Additionally, the processor 180 can filter and discard a pair of fake images and fake masks if either one of the pair of fake images and fake masks is of a lower level.

Next, the processor 180 can input the latent code corresponding to the filtered fake image and the filtered fake mask into the dataset generation learning machine to learn the dataset generative model after the fake image and the fake mask are filtered out.

Here, the processor 180 can input a latent code corresponding to the filtered fake image into a pre-learned dataset generative model 440 to generate a dataset including a fake image and a fake mask.

At this time, the processor 180 can generate a dataset as a pair in which a fake image and the fake mask corresponding thereto correspond to each other one-to-one when generating a dataset.

Additionally, the processor 180 can store learning data including the generated dataset in the memory 170.

Next, when a dataset is generated, the processor 180 can input fake images and fake masks corresponding thereto included in the dataset into a segmentation learning machine to relearn the segmentation model 420.

Here, the processor 180 can input a learning dataset including fake images of the same class and fake masks corresponding thereto into the segmentation learning machine.

In this way, the present disclosure can minimize the time and cost for mask generation and improve segmentation performance by automatically generating a dataset including a mask using a dataset generative model and relearning a segmentation model using the generated dataset as learning data.

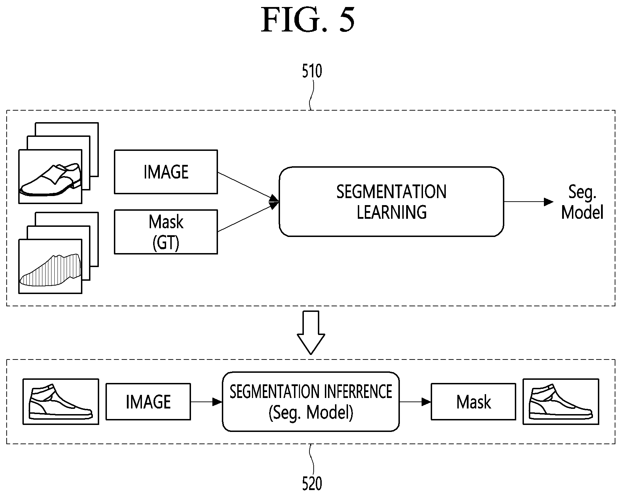

FIG. 5 is a diagram for explaining a mask generation process of a segmentation model according to one embodiment of the present disclosure.

As illustrated in FIG. 5, the present disclosure can obtain a real image and a mask thereof, and input the obtained real image and the mask thereof into a segmentation learning machine to train a segmentation model.

Here, the present disclosure can input learning data including real images and masks of the same class into a segmentation learning machine.

As an example, the present disclosure can obtain a mask of the same product class as the real image if the real image is of a specific product class, and input learning data including the obtained real image and mask of the same specific product class into a segmentation learning machine.

As illustrated in FIG. 5, the present disclosure can learn a segmentation model by inputting an actual shoe image and a mask corresponding thereto into a segmentation learning machine, such as a learning process 510 of a segmentation model.

In addition, the present disclosure can generate a dataset including fake images and fake masks through a dataset generative model to improve the performance of a segmentation model, and relearn the segmentation model using the generated dataset as learning data.

In this way, the relearned segmentation model can provide high segmentation performance by generating a mask, which is a corresponding Ground Truth (GT) data, when an actual shoe image is input, as in the mask generation process 520 of the segmentation model.

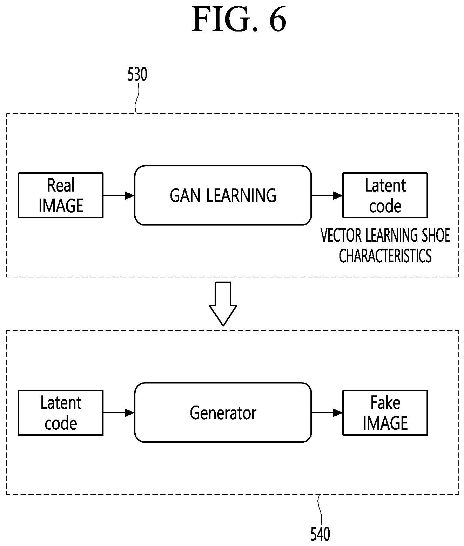

FIG. 6 is a diagram for explaining a process of generating a fake image of a generative model according to an embodiment of the present disclosure.

As illustrated in FIG. 6, the present disclosure can generate a fake image through a generative model for generating a mask, which is GT data for relearning a segmentation model.

In other words, the present disclosure can obtain a real image, input the obtained real image into a generative model, and learn the generative model to generate a latent code, which is a latent vector that has learned the characteristics of the real image.

The generative model of the present disclosure may include a generator of a generative adversarial network (GAN).

In addition, the present disclosure can generate fake images by inputting latent code into the generator of the generative model once the generative model is learned.

As illustrated in FIG. 6, the present disclosure can generate a latent code, which is a latent vector that learns the characteristics of a shoe image by inputting an actual shoe image into a GAN learning machine, such as a learning process 530 of a generative model.

Next, the present disclosure can generate a fake image by inputting a latent code for a shoe image into the generator of the generative model, such as a fake image generation process 540 of the generative model.

In this way, the present disclosure can generate a large number of different fake images through a generative model for generating masks, which are a large number of GT data.

The reason is to input the generated fake images into a segmentation model to generate a large number of fake masks.

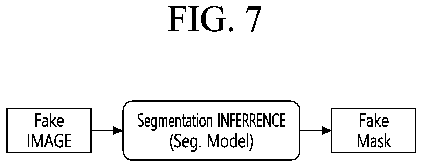

FIG. 7 is a diagram for explaining a process of generating a fake mask of a segmentation model according to an embodiment of the present disclosure.

As illustrated in FIG. 7, the present disclosure can generate a fake mask by inputting a fake image generated through a generative model into a pre-learned segmentation model.

Here, the segmentation model can be pre-learned by inputting learning data containing real images and masks corresponding thereto.

Additionally, the segmentation model can generate fake masks in proportion to the number of fake images generated by the generative model of Fig. 6.

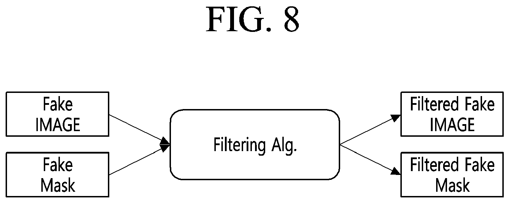

FIG. 8 is a diagram for explaining a filtering process of a filter according to one embodiment of the present disclosure.

As illustrated in FIG. 8, in the present disclosure, if a fake image is generated through the generative model of FIG. 6 and a fake mask is generated through the segmentation model of FIG. 7, and the generated fake image and fake mask are input into a filter including a filtering algorithm to filter to select only the high-level fake image and fake mask of a higher level.

The present disclosure can remove bad fake images and fake masks by selecting only high-level fake images and fake masks of a higher level through a filtering process.

Here, the present disclosure calculates the image similarity between the original image corresponding to the fake image and the restored image through a filtering algorithm, calculates the mask similarity between the original mask corresponding to the fake mask and the restored mask, and calculates an error value based on the calculated image similarity and mask similarity, so that only the high-level fake images and fake masks of a higher level can be selected at a certain ratio.

As an example, the present disclosure can filter by inputting a fake image and a fake mask corresponding thereto as a pair in a one-to-one correspondence into a filter, and selecting a pair of a fake image of a higher level and a fake mask thereof in a one-to-one correspondence through the filter.

In addition, the present disclosure can filter out and discard a pair of fake images and fake masks if either one of the pair of fake images and fake masks is of a lower level.

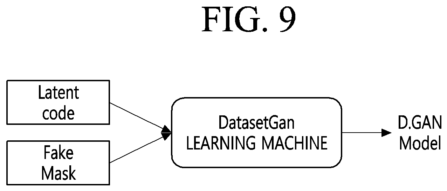

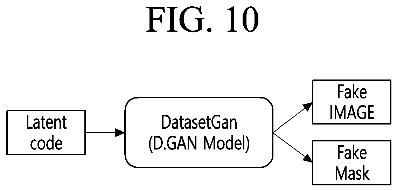

FIG. 9 is a diagram for explaining the learning process of a dataset generative model according to an embodiment of the present disclosure, and FIG. 10 is a diagram for explaining a dataset generation process of a dataset generative model according to an embodiment of the present disclosure.

As illustrated in FIG. 9, the present disclosure can learn a dataset generative model by inputting a latent code corresponding to the filtered fake image and the filtered fake mask into a dataset generation learning machine after the fake image and the fake mask are filtered out.

In addition, as illustrated in FIG. 10, the present disclosure can generate a dataset including fake images and fake masks by inputting latent codes corresponding to filtered fake images into a pre-learned dataset generative model.

Here, In the present disclosure, when generating a dataset, a dataset can be generated in pairs where a fake image and a corresponding fake mask correspond to each other one-to-one.

In this way, the present disclosure can secure a large number of masks with minimal time and cost by automatically generating a dataset including fake images and fake masks through a dataset generative model.

In addition, in the present disclosure, when a dataset is generated, a fake image included in the dataset and a fake mask corresponding thereto can be input into a segmentation learning machine to relearn a segmentation model.

In this way, the present disclosure can minimize the time and cost for mask generation and improve segmentation performance by automatically generating a dataset including a mask using a dataset generative model and relearning a segmentation model using the generated dataset as learning data.

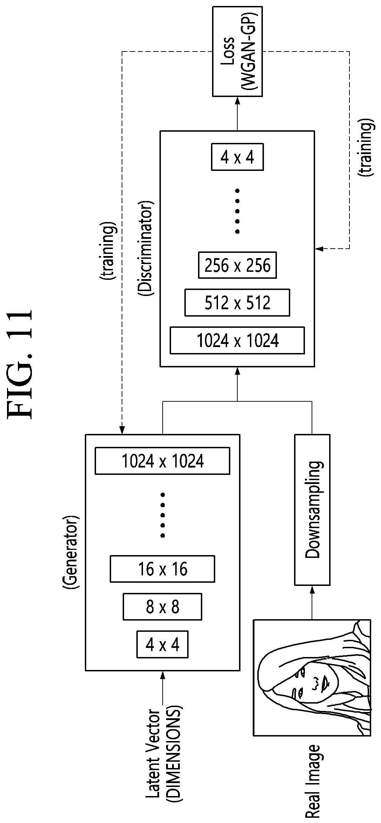

FIG. 11 is a diagram for explaining a generator of a generative model according to one embodiment of the present disclosure.

As illustrated in FIG. 11, the present disclosure can generate fake images using a generative adversarial network (GAN) model to generate a mask, which is GT data for relearning a segmentation model.

Here, the GAN model can include a generator and a discriminator.

When a latent vector is input into the generator, the GAN model generates a fake image corresponding to the latent vector, and when the downsampled real image and the fake image generated from the generator are input into the discriminator, the discriminator calculates the error between the real image and the fake image, and the generator and discriminator can be learned based on the calculated error.

The present disclosure can generate fake images using a generator of a GAN model.

In this way, the present disclosure can generate a large number of diverse fake images through a GAN model for mask generation, which is a large number of GT data.

The reason is to input the generated fake images into a segmentation model to generate a large number of fake masks.

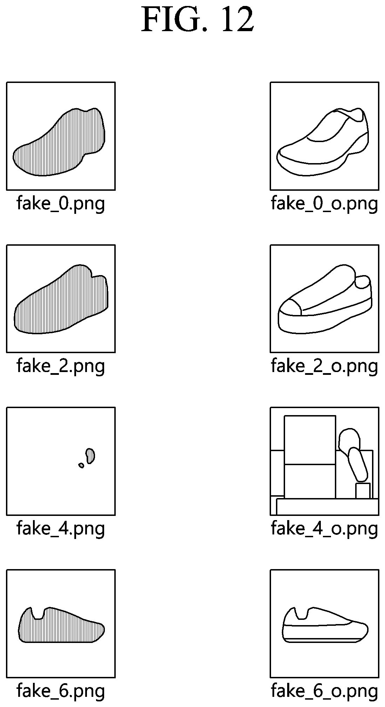

FIG. 12 is a diagram illustrating a fake mask generated from a segmentation model according to an embodiment of the present disclosure.

As illustrated in FIG. 12, the present disclosure can generate a fake mask by inputting a fake image generated through a generative model into a pre-learned segmentation model.

Here, the segmentation model can generate fake masks corresponding to the input fake images, and can generate fake masks in proportion to the number of input fake images.

As illustrated in Fig. 12, the fake mask generated by the segmentation model may generate normal fake masks for fake images, but may also generate bad fake masks for some fake images.

This is because the defect rate of the generated fake masks may vary according to the performance of the segmentation model.

In other words, in the case of a segmentation model with high segmentation performance, there are almost no defects in the generated fake masks, but in the case of a segmentation model with low segmentation performance, the defects in the generated fake masks may increase.

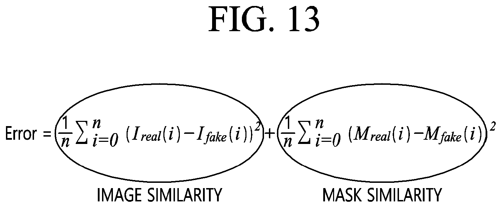

FIG. 13 is a diagram for explaining a process for calculating image similarity and mask similarity of a filter according to an embodiment of the present disclosure.

As illustrated in FIG. 13, in the present disclosure, if a fake image is generated through a generative model and a fake mask is generated through a segmentation model, then the generated fake image and fake mask are input into a filter including a filtering algorithm to filter to select only the fake image and fake mask of a higher level.

Here, the present disclosure calculates the image similarity between the original image corresponding to the fake image and the restored image through a filtering algorithm, calculates the mask similarity between the original mask corresponding to the fake mask and the restored mask, and calculates an error value based on the calculated image similarity and mask similarity, so that only the fake images and fake masks of a higher level can be selected at a certain ratio.

As an example, the present disclosure can calculate the image similarity using a formula consisting of:

$$image\ similarity = \frac{1}{n} \sum_{i=0}^{n} (I_{real}(i) - I_{fake}(i))^2$$

In addition, the present disclosure can calculate the mask similarity using a formula consisting of:

$$mask\ similarity = \frac{1}{n} \sum_{i=0}^{n} (M_{real}(i) - M_{fake}(i))^2$$

The present disclosure can calculate an error value using a formula consisting of:

$$Error = \frac{1}{n} \sum_{i=0}^{n} (I_{real}(i) - I_{fake}(i))^2 + \frac{1}{n} \sum_{i=0}^{n} (M_{real}(i) - M_{fake}(i))^2$$

In other words, the present disclosure can select only about 50% of the fake images having a higher level and about 50% of the fake masks having a of a higher level among a plurality of fake images and a plurality of fake masks input to the filter.

In addition, the present disclosure can filter so that when a fake image and a fake mask are input to the filter 430, the fake image and fake mask corresponding thereto correspond to each other one-to-one and are input to the filter 430 as a pair, and the fake image of a higher level and a fake mask thereof correspond to each other one-to-one and are selected as a pair through the filter 430.

In addition, the present disclosure can filter out and discard a pair of fake images and fake masks if either one of the pair of fake images and fake masks is of a lower level.

In this way, the present disclosure can generate a mask with almost no defects when generating learning data for improving the performance of a segmentation model through a filtering process.

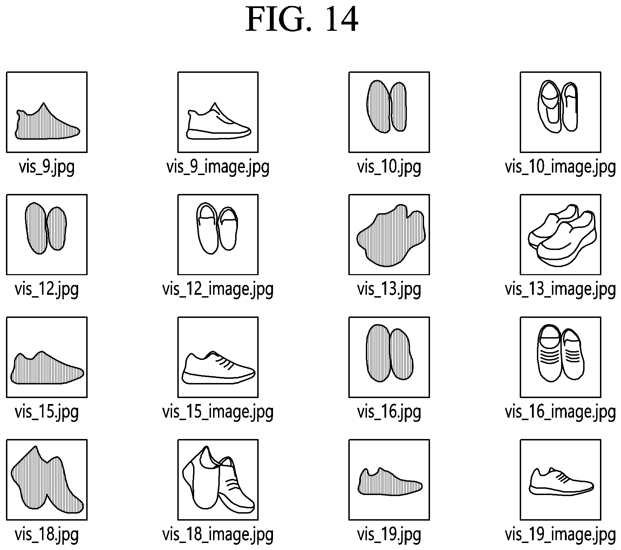

FIG. 14 is a diagram illustrating a dataset generated from a dataset generative model according to an embodiment of the present disclosure.

As illustrated in FIG. 14, the present disclosure can learn a dataset generative model by inputting the latent code corresponding to the filtered fake image and the filtered fake mask into a dataset generation learning machine after the fake image and the fake mask are filtered out, and can generate a dataset including the fake image and the fake mask by inputting the latent code corresponding to the filtered fake image into a pre-learned dataset generative model.

As illustrated in FIG. 14, the present disclosure can generate a dataset in which fake images and fake masks corresponding thereto correspond one-to-one in pairs.

In addition, the present disclosure can store learning data including the generated dataset in memory.

In this way, the present disclosure can secure a large number of masks with minimal time and cost by automatically generating a dataset including fake images and fake masks through a dataset generative model.

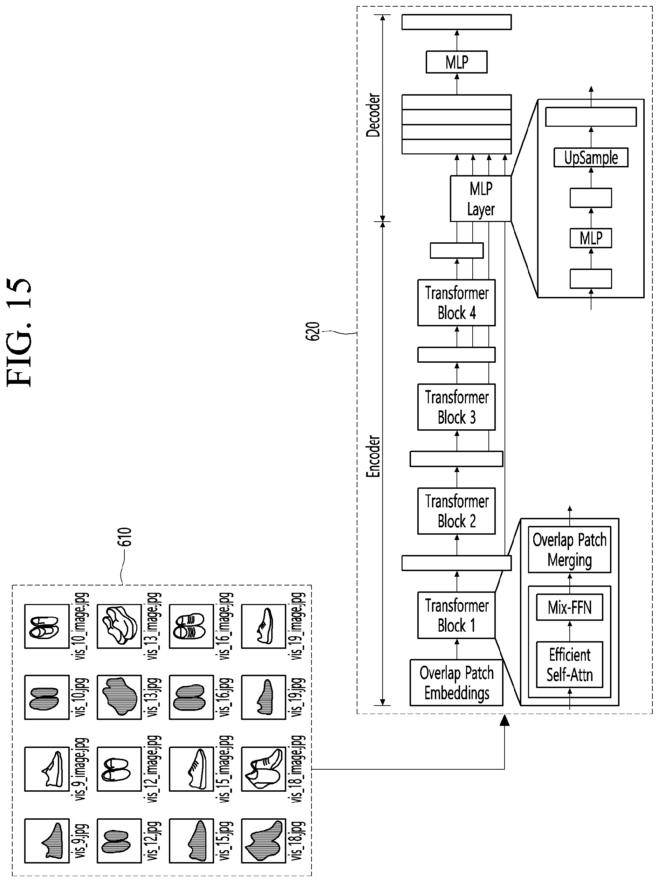

FIG. 15 is a diagram for explaining a re-learning process of a segmentation model according to an embodiment of the present disclosure.

As illustrated in FIG. 15, the present disclosure can relearn a segmentation model by inputting fake images and fake masks corresponding thereto included in a dataset 610 into a segmentation learning machine 620 when the dataset is generated.

Here, the present disclosure can input a dataset 610 including fake images of the same class and fake masks corresponding thereto into a segmentation learning machine 620.

In this way, the present disclosure can minimize the time and cost for mask generation and improve segmentation performance by automatically generating a dataset including a mask using a dataset generative model and relearning a segmentation model using the generated dataset as training data.

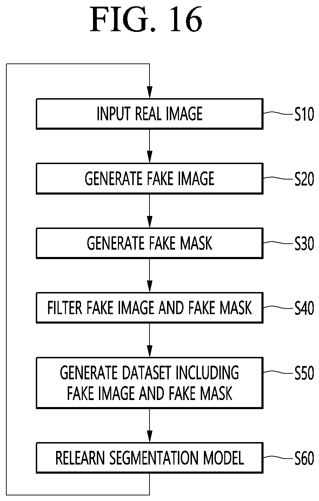

FIG. 16 is a flowchart for explaining a segmentation learning method of an artificial intelligence apparatus according to an embodiment of the present disclosure.

As illustrated in FIG. 16, the present disclosure can generate a fake image by inputting a real image into a pre-learned generative model (S20) when the real image is input (S10).

Here, the present disclosure can learn the generative model to obtain a real image, input the obtained real image into the generative model, and generate a latent code, which is a latent vector that has learned the characteristics of the real image.

Next, the present disclosure can generate a fake mask by inputting a fake image into a pre-learned segmentation model (S30).

Here, the present disclosure can obtain a real image and mask thereof, and input the obtained real image and mask thereof into a segmentation learning machine to learn a segmentation model.

Next, the present disclosure can filter out the generated fake images and fake masks (S40).

Here, the present disclosure calculates the image similarity between the original image corresponding to the fake image and the restored image through a filtering algorithm, calculates the mask similarity between the original mask corresponding to the fake mask and the restored mask, and calculates an error value based on the calculated image similarity and mask similarity, so that only the fake images and fake masks of a higher level can be selected at a certain ratio.

For example, image similarity can be calculated using a formula consisting of

$$image\ similarity = \frac{1}{n}\sum_{i=0}^{n}(I_{real}(i) - I_{fake}(i))^2$$

and mask similarity can be calculated using a formula consisting of

$$mask\ similarity = \frac{1}{n}\sum_{i=0}^{n}(M_{real}(i) - M_{fake}(i))^2 .$$

.

The error value can be calculated using a formula consisting of

$$Error = \frac{1}{n}\sum_{i=0}^{n}(I_{real}(i) - I_{fake}(i))^2 + \frac{1}{n}\sum_{i=0}^{n}(M_{real}(i) - M_{fake}(i))^2 .$$

In addition, the present disclosure can generate a dataset including fake images and fake masks by inputting filtered fake images into a pre-learned dataset generative model (S50).

Here, the present disclosure can learn a dataset generative model by inputting a latent code corresponding to a filtered fake image and a filtered fake mask into a dataset generation learning machine.

Next, the present disclosure can relearn the segmentation model by inputting the dataset as learning data (S60).

Here, the present disclosure can relearn a segmentation model by inputting fake images included in a dataset and fake masks corresponding thereto into a segmentation learning machine.

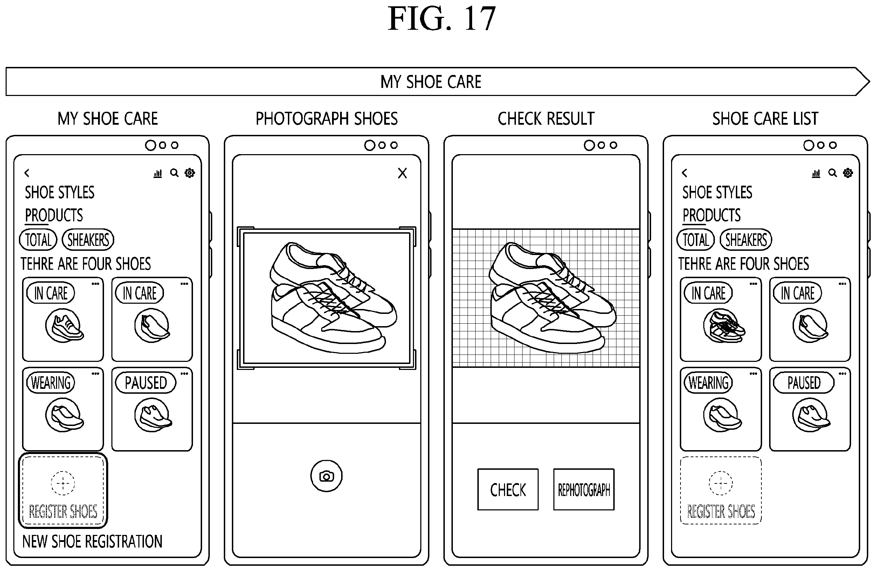

FIGS. 17 to 19 are diagrams illustrating a shoe image segmentation process of an artificial intelligence apparatus according to an embodiment of the present disclosure.

FIG. 17 is a diagram illustrating an embodiment in which the segmentation function of the present disclosure is applied to a shoe care app.

As illustrated in FIG. 17, the present disclosure can provide a shoe care window to a user terminal when a user executes a shoe care app through the user terminal.

Next, the present disclosure can activate the camera of the user terminal when the user selects a shoe care registration item in the shoe care window.

Next, the present disclosure can segment only the shoe object from the photographed shoe image when a user takes a picture of the user's shoes, thereby removing the background and providing only the shoe object.

In addition, the present disclosure can register a shoe object segmented from a shoe image into a shoe management list according to a user request.

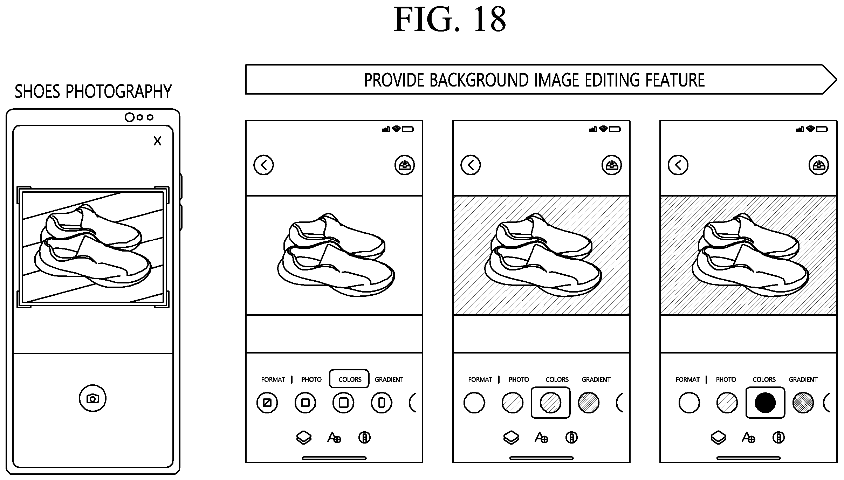

FIG. 18 is a diagram illustrating an embodiment applied to changing the background of a shoe image through segmentation execution of the present disclosure.

As illustrated in FIG. 18, the present disclosure can segment only the shoe object from the photographed shoe image when a user takes a picture of a shoe, thereby removing the background and providing only the shoe object.

Additionally, the present disclosure can add or edit various backgrounds around a shoe object according to the background items selected by the user.

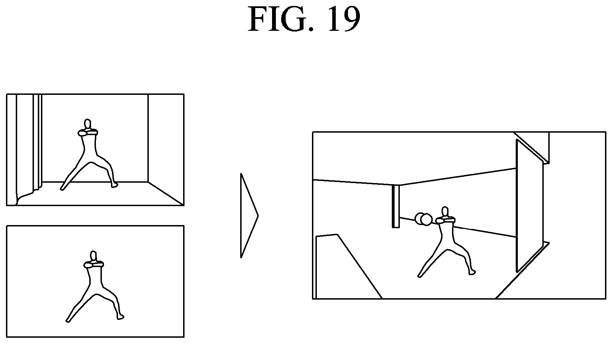

FIG. 19 is a diagram illustrating an embodiment in which the segmentation function of the present disclosure is applied to a transparent display.

As illustrated in FIG. 19, the present disclosure can segment only a specific object from the photographed image to remove the background and provide only the specific object when the user provides an image photographed by a camera through a transparent display.

Additionally, the present disclosure can synthesize a virtual background around a specific object according to a background item selected by a user.

In this way, the present disclosure can minimize the time and cost for mask generation and improve segmentation performance by automatically generating a dataset including a mask using a dataset generative model and relearning a segmentation model using the generated dataset as training data.

[Industrial applicability]

According to the artificial intelligence apparatus according to the present disclosure, a dataset including a mask is automatically generated using a dataset generative model, and the segmentation model is relearned using the generated dataset as learning data, thereby minimizing the time and cost for mask generation and improving segmentation performance, so that the industrial applicability is remarkable.

**Claims**

1. An artificial intelligence apparatus comprising:

   a memory storing learning data; and,
   a processor performing segmentation learning using the learning data,
   wherein the processor inputs a real image into a pre-learned generative model to generate a fake image, inputs the fake image into a pre-learned segmentation model to generate a fake mask, filters the generated fake image and the fake mask, inputs the filtered fake image into a pre-learned dataset generative model to generate a dataset including the fake image and the fake mask, and inputs the dataset as learning data to re-learn the segmentation model.

2. The artificial intelligence apparatus of claim 1,
   wherein the processor obtains a real image and a mask thereof, and inputs the obtained real image and the mask thereof into a segmentation learning machine to learn the segmentation model.

3. The artificial intelligence apparatus of claim 2,
   wherein the processor, when the segmentation model is learned, inputs the real image into the learned segmentation model to generate a mask, which is GT (Ground Truth) data.

4. The artificial intelligence apparatus of claim 1,
   wherein the processor obtains the real image, inputs the obtained real image into the generative model, and learns the generative model to generate a latent code, which is a latent vector that has learned the characteristics of the real image.

5. The artificial intelligence apparatus of claim 1,
   wherein the processor, when the fake image is generated through the generative model and the fake mask is generated through the segmentation model, inputs the generated fake image and the fake mask into a filter including a filtering algorithm to filter so as to select only the fake image and the fake mask at a higher level.

6. The artificial intelligence apparatus of claim 5,
   wherein the processor calculates the image similarity between an original image corresponding to the fake image and the restored image through the filtering algorithm, calculates the mask similarity between the original mask corresponding to the fake mask and the restored mask, and calculates the error value based on the calculated image similarity and mask similarity to select only the fake images and the fake masks at a certain level.

7. The artificial intelligence apparatus of claim 6,
   wherein the processor calculates the image similarity using a formula consisting of

$$image\ similarity = \frac{1}{n} \sum_{i=0}^{n} (I_{real}(i) - I_{fake}(i))^2 ,$$

calculates the mask similarity using a formula consisting of

$$mask\ similarity = \frac{1}{n} \sum_{i=0}^{n} (M_{real}(i) - M_{fake}(i))^2 ,$$

and calculates the error value using a formula consisting of

$$Error = \frac{1}{n}\sum_{i=0}^{n}(I_{real}(i)-I_{fake}(i))^2 + \frac{1}{n}\sum_{i=0}^{n}(M_{real}(i)-M_{fake}(i))^2 .$$

8. The artificial intelligence apparatus of claim 1,
wherein the processor, when the fake image and the fake mask are filtered, inputs the latent code corresponding to the filtered fake image and the filtered fake mask to the dataset generation learning machine to learn the dataset generative model.

9. The artificial intelligence apparatus of claim 8,
wherein the processor generates a dataset including the fake images and the fake masks by inputting the latent code corresponding to the filtered fake image into a pre-learned dataset generative model.

10. The artificial intelligence apparatus of claim 1,
wherein the processor, when the dataset is generated, inputs the fake image included in the dataset and the fake mask corresponding thereto into a segmentation learning machine to re-learn the segmentation model.

11. A segmentation learning method of an artificial intelligence apparatus comprising:

generating a fake image by inputting a real image into a pre-learned generative model;
generating a fake mask by inputting the fake image into a pre-learned segmentation model;
filtering the generated fake image and the fake mask;
generating a dataset including the fake image and the fake mask by inputting the filtered fake image into a pre-learned dataset generative model; and
re-learning the segmentation model by inputting the dataset as training data.

12. The segmentation learning method of claim 11,
wherein the generating the fake image obtains a real image, inputs the obtained real image into the generating model, and learns the generating model to generate a latent code, which is a latent vector that has learned the characteristics of the real image.

13. The segmentation learning method of claim 11,
wherein the generating the fake mask obtains a real image and a mask thereof, and inputs the obtained real image and the mask thereof into a segmentation learning machine to learn the segmentation model.

14. The segmentation learning method of claim 11,
wherein the filtering calculates the image similarity between the original image corresponding to the fake image and the restored image through a filtering algorithm, calculates the mask similarity between an original mask corresponding to the fake mask and a restored mask, and calculates an error value based on the calculated image similarity and mask similarity to select only the top level fake images and the fake masks at a certain ratio.

15. The segmentation learning method of claim 11,
wherein the generating the dataset inputs a latent code corresponding to the filtered fake image and the filtered fake mask into the dataset generation learning machine to learn the dataset generative model.

# FIG. 1

<u>100</u>

180

| | |
|---|---|
| 110 — COMMUNICATION PART | |
| 120 — INPUT PART | PROCESSOR |
| 130 — LEARNING PROCESSOR | |

| | |
|---|---|
| MEMORY — 170 | |
| OUT PART — 150 | |
| SENSING PART — 140 | |

# FIG. 2

# FIG. 3

1

100e

Home
Appliance

200 — AI Server

10

Smartphone — 100d

Cloud Network
(5G)

100a — Robot

XR device — 100c

Self-Driving
Vehicle

100b

# FIG. 4

# FIG. 5

510

IMAGE

Mask (GT)

SEGMENTATION LEARNING

Seg. Model

IMAGE

SEGMENTATION INFERRENCE (Seg. Model)

Mask

520

# FIG. 6

530

```
┌──────────────────────────────────────────────────────────┐
│                                                            │
│   ┌──────────┐      ┌──────────────┐      ┌──────────┐     │
│   │  Real    │ ───▶ │ GAN LEARNING │ ───▶ │ Latent   │     │
│   │  IMAGE   │      │              │      │ code     │     │
│   └──────────┘      └──────────────┘      └──────────┘     │
│                                      VECTOR LEARNING SHOE   │
│                                         CHARACTERISTICS     │
└──────────────────────────────────────────────────────────┘
```

⬇

```
┌──────────────────────────────────────────────────────────┐
│                                                            │
│   ┌──────────┐      ┌──────────────┐      ┌──────────┐     │
│   │ Latent   │ ───▶ │  Generator   │ ───▶ │  Fake    │     │
│   │ code     │      │              │      │  IMAGE   │     │
│   └──────────┘      └──────────────┘      └──────────┘     │
│                                                            │
└──────────────────────────────────────────────────────────┘
```

540

# FIG. 7

```
┌──────────┐      ┌─────────────────────────┐      ┌──────────┐
│   Fake   │ ───► │ Segmentation INFERRENCE │ ───► │   Fake   │
│  IMAGE   │      │      (Seg. Model)       │      │   Mask   │
└──────────┘      └─────────────────────────┘      └──────────┘
```

# FIG. 8

```
┌──────────┐
│   Fake   │ ──┐
│  IMAGE   │   │
└──────────┘   │        ┌─────────────────┐        ┌────────────────┐
               ├──────> │                 │ ──────>│ Filtered Fake  │
               │        │  Filtering Alg. │        │     IMAGE      │
┌──────────┐   │        │                 │        └────────────────┘
│   Fake   │ ──┘        └─────────────────┘        ┌────────────────┐
│   Mask   │                               ──────> │ Filtered Fake  │
└──────────┘                                       │     Mask       │
                                                   └────────────────┘
```

# FIG. 9

| Latent code |
|---|

| Fake Mask |
|---|

DatasetGan LEARNING MACHINE

D.GAN Model

# FIG. 10

```
┌─────────┐      ┌──────────────┐         ┌──────────┐
│ Latent  │ ───▶ │  DatasetGan  │ ───────▶│  Fake    │
│ code    │      │ (D.GAN Model)│         │  IMAGE   │
└─────────┘      └──────────────┘    \    └──────────┘
                                      \   ┌──────────┐
                                       ──▶│  Fake    │
                                          │  Mask    │
                                          └──────────┘
```

# FIG. 11

# FIG. 12

fake_0.png

fake_0_o.png

fake_2.png

fake_2_o.png

fake_4.png

fake_4_o.png

fake_6.png

fake_6_o.png

# FIG. 13

$$\text{Error} = \left(\frac{1}{n}\sum_{i=0}^{n}(I_{real}(i)-I_{fake}(i))^2\right)+\left(\frac{1}{n}\sum_{i=0}^{n}(M_{real}(i)-M_{fake}(i))^2\right)$$

IMAGE SIMILARITY          MASK SIMILARITY

# FIG. 14

vis_9.jpg

vis_9_image.jpg

vis_10.jpg

vis_10_image.jpg

vis_12.jpg

vis_12_image.jpg

vis_13.jpg

vis_13_image.jpg

vis_15.jpg

vis_15_image.jpg

vis_16.jpg

vis_16_image.jpg

vis_18.jpg

vis_18_image.jpg

vis_19.jpg

vis_19_image.jpg

EP 4 571 586 A1

# FIG. 15

# FIG. 16

```
INPUT REAL IMAGE ——— S10

GENERATE FAKE IMAGE ——— S20

GENERATE FAKE MASK ——— S30

FILTER FAKE IMAGE AND FAKE MASK ——— S40

GENERATE DATASET INCLUDING
FAKE IMAGE AND FAKE MASK ——— S50

RELEARN SEGMENTATION MODEL ——— S60
```

# FIG. 17

MY SHOE CARE

| MY SHOE CARE | PHOTOGRAPH SHOES | CHECK RESULT | SHOE CARE LIST |

EP 4 571 586 A1

# FIG. 18

SHOES PHOTOGRAPHY

PROVIDE BACKGROUND IMAGE EDITING FEATURE

# FIG. 19

## INTERNATIONAL SEARCH REPORT

| International application No. |
| --- |
| **PCT/KR2022/012366** |

| | | |
| --- | --- | --- |
| **A.** | **CLASSIFICATION OF SUBJECT MATTER** | |
| | G06N 3/08(2006.01)i; G06N 3/04(2006.01)i; G06T 7/11(2017.01)i; G06T 5/20(2006.01)i; G06V 10/82(2022.01)i | |

According to International Patent Classification (IPC) or to both national classification and IPC

| | |
| --- | --- |
| **B.** | **FIELDS SEARCHED** |

Minimum documentation searched (classification system followed by classification symbols)

G06N 3/08(2006.01); G06K 9/62(2006.01); G06K 9/66(2006.01); G06T 11/00(2006.01); G06T 11/60(2006.01); G06T 5/20(2006.01); G06T 7/00(2006.01); G06T 7/149(2017.01); G06T 7/174(2017.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 신경망(neural network), 세그먼테이션(segmentation), 모델(model), 훈련(training), 마스크(mask), 가짜 이미지(fake image)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | US 2021-0183069 A1 (CAPITAL ONE SERVICES, LLC) 17 June 2021 (2021-06-17)<br>See paragraph [0067]; and claim 8. | 1-6,8-15 |
| A | | 7 |
| Y | US 2017-0109625 A1 (MICROSOFT TECHNOLOGY LICENSING, LLC) 20 April 2017 (2017-04-20)<br>See paragraph [0065]; and claims 1 and 9. | 1-6,8-15 |
| A | US 2019-0370957 A1 (GENERAL ELECTRIC COMPANY) 05 December 2019 (2019-12-05)<br>See paragraphs [0051]-[0054]; and figures 13-15. | 1-15 |
| A | KR 10-2020-0107742 A (ELECTRONICS AND TELECOMMUNICATIONS RESEARCH INSTITUTE)<br>16 September 2020 (2020-09-16)<br>See paragraphs [0030]-[0073]; and figure 1. | 1-15 |

| | | | |
| --- | --- | --- | --- |
| ✓ Further documents are listed in the continuation of Box C. | | ✓ See patent family annex. | |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 May 2023** | **03 May 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2022/012366** |

### C. DOCUMENTS CONSIDERED TO BE RELEVANT

| Category* | Citation of document, with indication, where appropriate, of the relevant passages | Relevant to claim No. |
|---|---|---|
| A | US 2019-0287283 A1 (ADOBE INC.) 19 September 2019 (2019-09-19)<br>See paragraphs [0036]-[0041]; and figure 3. | 1-15 |

Form PCT/ISA/210 (second sheet) (July 2022)

## INTERNATIONAL SEARCH REPORT
### Information on patent family members

| International application No. |
| --- |
| **PCT/KR2022/012366** |

| Patent document cited in search report | | | Publication date (day/month/year) | Patent family member(s) | | | Publication date (day/month/year) |
| --- | --- | --- | --- | --- | --- | --- | --- |
| US | 2021-0183069 | A1 | 17 June 2021 | CA | 3041280 | A1 | 26 October 2019 |
| | | | | EP | 3561770 | A1 | 30 October 2019 |
| | | | | US | 10332261 | B1 | 25 June 2019 |
| | | | | US | 10937171 | B2 | 02 March 2021 |
| | | | | US | 11538171 | B2 | 27 December 2022 |
| | | | | US | 2019-0333226 | A1 | 31 October 2019 |
| US | 2017-0109625 | A1 | 20 April 2017 | US | 9858525 | B2 | 02 January 2018 |
| US | 2019-0370957 | A1 | 05 December 2019 | CN | 110556179 | A | 10 December 2019 |
| | | | | US | 10902587 | B2 | 26 January 2021 |
| KR | 10-2020-0107742 | A | 16 September 2020 | US | 2022-0180490 | A1 | 09 June 2022 |
| | | | | WO | 2020-180134 | A1 | 10 September 2020 |
| US | 2019-0287283 | A1 | 19 September 2019 | US | 10839575 | B2 | 17 November 2020 |

Form PCT/ISA/210 (patent family annex) (July 2022)